# EUROPÄISCHE PATENTANMELDUNG

(11) **EP 1 803 549 A1**
(43) Veröffentlichungstag der Anmeldung: **04.07.2007**
(21) Anmeldenummer: 05028698.8
(22) Anmeldetag: 30.12.2005
(51) Int. Cl.: B30B 15/06, B30B 15/00, B30B 5/02, B27N 3/20, B23K 1/00

(54) **Heizplatte für eine Plattenpresse**

(71) Anmelder: Robert Bürkle GmbH, 72250 Freudenstadt (DE)
(72) Erfinder: Damm, Norbert, 76689 Karlsdorf-Neuthard (DE); Dölker, Gerhard, 72270 Baiersbronn (DE); Haist, Markus, 72250 Freudenstadt (DE)
(74) Vertreter: Kaiser, Magnus

(57) **Zusammenfassung**

Die Erfindung betrifft eine Heizplatte für eine Plattenpresse zum flächigen Verpressen von tafelförmigen Werkstücken mittels Druck und Wärme, bestehend aus mindestens zwei an einer im Wesentlichen parallel zur Heizplattenebene verlaufenden Trennebene 3 miteinander verbundenen Teilplatten 1, 2, 10, 13, wobei im Inneren der Heizplatte mindestens ein Kanal 20 vorgesehen ist, der entlang der Trennebene 3 zwischen den Teilplatten 1, 2, 10, 13 verläuft und mit einem jeweils nach außen führenden Vorlaufkanal 6 sowie einem Rücklaufkanal 7 verbunden ist, wobei die Teilplatten 1, 2, 10, 13 randseitig umlaufend fest aneinandergefügt sind. Die Teilplatten 1, 2, 10, 13 sind innerhalb des randseitigen, fest aneinandergefügten Bereichs nicht aneinandergefügt und derart ausgebildet, dass ein in der Trennebene 3 wirkender Spaltdruck eines druckbeaufschlagten, durch den Kanal 20, 5 strömenden Fluids zu einer konvexen Auswölbung zumindest einer der Teilplatten 1, 2 führt.

## Beschreibung

Die Erfindung betrifft eine Heizplatte für eine Plattenpresse zum flächigen Verpressen von tafelförmigen Werkstücken mittels Druck und Wärme nach dem Oberbegriff des Anspruchs 1. Demnach besteht eine solche Heizplatte aus mindestens zwei, an einer im Wesentlichen parallel zur Heizplattenebene verlaufenden Trennebene fest miteinander verbundenen Teilplatten. Im Inneren der Heizplatte ist mindestens ein Kanal vorgesehen, der entlang der Trennebene zwischen den Teilplatten verläuft und mit einem jeweils nach außen führenden Vorlaufkanal sowie einem Rücklaufkanal verbunden ist. Der Begriff "Heizplatte" schließt nicht aus, dass die Heizplatte im Rahmen der vorliegenden Erfindung auch oder ausschließlich zum Kühlen eingesetzt wird.

Plattenpressen mit Heizplatten werden zur Herstellung von Spanplatten, Faserplatten oder Sperrholzplatten verwendet, sowie um solche Platten ein- oder beidseitig mit Vergütungsfolien oder Furnieren zu beschichten. Auch zur Herstellung von Chipkarten, elektrischen Leiterplatten sowie ganz allgemein zum Laminieren oder Heißprägen ein- oder mehrlagiger tafelförmiger Werkstücke werden Plattenpressen mit Heizplatten verwendet. Die Heizplatten übertragen die zur Verformung oder zur Aktivierung thermisch reagierender Kleber erforderliche Prozesswärme in möglichst kurzer Zeit und mit ausreichend gleichmä-ßiger flächiger Temperaturverteilung auf die Werkstücke. Umgekehrt können sie auch Kälte auf die Werkstücke übertragen. Gleichzeitig üben sie einen flächig wirkenden Druck auf die Werkstücke aus.

Zur Erzielung einer möglichst raschen homogenen Temperaturverteilung werden Heizplatten mit einer Anzahl von in ihrem Inneren verlaufenden Kanälen zur Durchleitung eines Fluids, insbesondere einer Flüssigkeit, beispielsweise Thermoöl versehen. Herkömmlicherweise werden diese Kanäle durch Langlochbohrungen in den massiv ausgebildeten Heizplatten hergestellt, die an ihren Enden durch Stopfen verschlossen werden. Das Anfertigen einer solchen herkömmlichen Heizplatte ist allerdings sehr kostenintensiv, insbesondere weil sehr lange Bohrungen gesetzt werden müssen, meist in der Größenordnung von einem Meter Länge und darüber. Ferner kann eine herkömmliche Heizplatte aufgrund der Langlochbohrungen eine gewisse Mindestdicke nicht unterschreiten, die bei etwa 35 mm liegt. Massive Heizplatten mit dieser Dicke besitzen allerdings eine erhebliche Wärmekapazität, so dass der Energieaufwand für das Aufheizen und Abkühlen der Heizplatten sehr hoch ist.

Zur Vermeidung dieser Nachteile ist aus der DE 203 01 292 U1 der Anmelderin eine Heizplatte der eingangs genannten Art bekannt geworden, bei der die Fluidkanäle nicht mehr durch Langlochbohrungen im Vollmaterial hergestellt werden, sondern durch Oberflächenfräsen auf einer Teilplatte. Die Heizplatte wird aus mindestens zwei Teilplatten zusammengesetzt, wobei die Kanäle für das durchgeleitete Fluid in die Trennebene zwischen den beiden Teilplatten gelegt werden. So ist es möglich, entweder den gesamten Kanalquerschnitt der Kanäle aus einer der beiden Teilplatten auszufräsen und die andere Teilplatte als Deckel zu verwenden, oder aus beiden Teilplatten jeweils einen Teilquerschnitt der Kanäle auszufräsen, wobei sich die Teilquerschnitte dann beim Aufeinandersetzen der beiden Teilplatten zu den Vollquerschnitten ergänzen. Wenn mehrere Kanalebenen vorgesehen sein sollen, können auch mehr als zwei Teilplatten verwendet werden, um die Heizplatte zusammenzusetzen.

Problematisch bei einer solchen aus Teilplatten bestehenden Heizplatte ist die feste Verbindung zweier Teilplatten an ihrer Trennebene. Denn das insbesondere aus einer Flüssigkeit bestehende Fluid, das durch die Kanäle geleitet wird, muss mit einem relativ hohen Pumpendruck beaufschlagt werden, um die zur schnellen Aufheizung und Abkühlung der Heizplatte benötigte hohe Durchflussgeschwindigkeit zu gewährleisten. Ein hoher Pumpendruck führt jedoch zu einer sehr hohen auf die Teilplatten wirkenden Kraft in Richtung der Normalen der Trennebene, zumal dann, wenn die Flüssigkeit in den in der Trennebene gebildeten Spalt in den Kanalwänden eindringt und sich dementsprechend nahezu ganzflächig in der Trennebene innerhalb der Heizplatte verteilt. Dementsprechend sind zusätzliche Maßnahmen erforderlich, welche die Teilplatten fest aneinander halten, beispielsweise eine Anzahl von über die Fläche verteilte Zuganker.

Beim Herstellen von elektrischen Leiterplatten mittels Plattenpressen mit Heizplatten werden Kurztakt-Plattenpressen verwendet, in denen die erforderliche Prozesswärme außerordentlich schnell von der Heizplatte bereitgestellt wird, wonach dann kaltes Thermofluid durch die Heizplatte hindurchgeleitet wird, um die laminierte Leiterplatte ebenso schnell wieder abzukühlen. Je schneller ein solcher Arbeitstakt erfolgt, umso höher ist die Produktionskapazität der Plattenpresse. Allerdings stößt die Abfolgegeschwindigkeit der Arbeitstakte deshalb auf Grenzen, weil in Kurztakt-Plattenpressen für Leiterplatten üblicherweise Polster zwischen das Werkstück und die Heizplatten gelegt werden, um Faltenbildung beim Polymerisieren in der Leiterplatte zu vermeiden. Dies vor dem Hintergrund, dass Heizplatten kaum eine absolut ebene Oberfläche aufweisen und völlig parallel zueinander geführt sind. Zwischengelegte Polster, beispielsweise aus Pappe, gleichen Unregelmäßigkeiten aus. Solche Polster, die zwei- bis fünflagig verwendet werden, erschweren jedoch den Temperaturübergang von den Heizplatten zum Werkstück, so dass der kleinstmögliche Arbeitstakt aus diesem Grund gegen einen Grenzwert läuft, der nicht ohne große Qualitätsverluste unterschritten werden kann.

Aus der US 3,870,582 ist es bekannt, zum Laminieren von Ausweiskarten oder Kreditkarten aus Kunststoff eine Presse mit Heizplatten vorzusehen, bei der der Druck auf die zu laminierende Karte nicht von Anfang an über die gesamte Kartenfläche verteilt konstant aufgebracht wird, sondern mittels einer separat vorgesehenen zweidimensional gewölbten Federplatte der Druck zuerst auf einen mittigen Bereich der Karte aufgebracht und dann beidseits bis an die beiden Stirnseiten der Karte sukzessive verteilt wird. Hierdurch soll eine Blasenbildung zwischen den einzelnen Schichten der laminierten Karte verhindert werden.

Ausgehend von diesem Stand der Technik liegt der vorliegenden Erfindung die Aufgabe zugrunde, eine Heizplatte der eingangs genannten Art insbesondere für den Einsatzzweck in Kurztakt-Plattenpressen zu verbessern.

Gelöst ist diese Aufgabe durch eine Heizplatte mit den Merkmalen des Anspruchs 1. Bevorzugte Ausgestaltungen und Weiterbildungen der erfindungsgemäßen Heizplatte finden sich in den Ansprüchen 2 bis 15.

Erfindungsgemäß ist erkannt worden, dass die Faltenbildung bei Leiterplatten in Kurztakt-Plattenpressen, bei denen ohne zwischenliegende Polster verpresst wird, mit den unterschiedlichen Ausdehnungskoeffizienten des polymerisierenden Grundmaterials und der Kupferfolie zusammenhängt. Die Kupferfolie dehnt sich bei der Erwärmung schneller aus als das Grundmaterial, und auch schneller als die Heizplattenoberfläche. Die Kupferfolie wird beim ganzflächigen Verpressen jedoch auch in den Außenbereichen der Leiterplatte von den Heizplatten festgehalten, da diese bereits mit Druck beaufschlagt sind, während die zentralen Bereiche der Kupferfolie durch die Erwärmung nach außen drängen. Die mit fortschreitender Erwärmung sich ausdehnende Kupferfolie wird infolgedessen gestaucht und drückt Falten in die flüssig werdende Prepreg-HarzSchicht.

Erfindungsgemäß ist weiterhin erkannt worden, dass dieser Vorgang der Faltenbildung vermieden werden kann, wenn während der Erwärmung der Druck zunächst auf zentrale Bereiche der zu laminierenden Leiterplatte aufgebracht wird, wonach er dann konzentrisch nach außen verteilt wird. Hierdurch wird die Kupferfolie in den Außenbereichen zunächst nicht fixiert, so dass sie von innen nach außen fließen kann und eine Faltenbildung nicht zu befürchten ist.

Erfindungsgemäß ist außerdem erkannt worden, dass der im Stand der Technik nach der DE 203 01 292 U1 als äußerst nachteilig empfundene Effekt einer ungewollt möglichen konvexen Auswölbung der Teilplatten, die dementsprechend durch zusätzliche Maßnahmen, wie zum Beispiel Zuganker vermieden wird, bei Kurztakt-Plattenpressen genau den eben beschriebenen, erfindungsgemäß erkannten erwünschten Effekt einer zunächst zentral auf die Leiterplatte aufgebrachten Durckbeaufschlagung, die sich dann sukzessive in die Außenbereiche fortsetzt, erzielen kann; dann nämlich, wenn die Auswölbung der Teilplatten nicht mittels Zugankern und dergleichen verhindert wird, sondern ganz bewusst für eine konvexe Verformung der Heizplattenoberfläche beim Beginn des Pressvorgangs genutzt wird. Dementsprechend werden die Teilplatten einer eingangs genannten Heizplatte innerhalb des randseitigen, fest aneinandergefügten Bereichs erfindungsgemäß nicht aneinandergefügt und im Gegenteil derart ausgebildet, dass ein in der Trennebene wirkender Spaltdruck eines druckbeaufschlagten, durch die Kanäle strömenden Fluids zu einer konvexen Auswölbung zumindest einer der Teilplatten führt.

Das randseitig umlaufende feste Aneinanderfügen der Teilplatten kann stoffschlüssig mittels Verschweißen oder mittels Hochtemperatur-Vakuum-Lötens oder durch sonstige Maßnahmen durchgeführt werden. Das Schweißen oder Löten hat den entscheidenden Vorteil, dass die Teilplatten dementsprechend randseitig umlaufend auch flüssigkeitsdicht abgedichtet sind, so dass nicht befürchtet werden muss, dass Thermofluid, insbesondere Thermoöl mit einer Temperatur von üblicherweise bis zu 400 °C unbeabsichtigt austritt.

Der Pumpendruck für das im Kanal zwischen den Teilplatten fließende Thermofluid erzeugt bei einer entsprechend großen Fläche des Kanals in der Heizplatte eine hohe Normalkraft auf die Teilplatten, so dass diese vor dem Verpressen und zu Beginn des Verpressvorgangs sich konvex auswölben. Der Druck wirkt also im Wesentlichen zunächst auf zentrale Bereiche der zu verpressenden Leiterplatte. Erst dann, wenn der Pressdruck den Flüssigkeitsdruck im Inneren der Heizplatte übersteigt, geht die Auswölbung zurück, so dass die Leiterplatte letztendlich mit einem über die Fläche gleich verteilten Druck beaufschlagt wird. Es entsteht also genau der Effekt, bei dem erfindungsgemäß erkannt wurde, dass er die Faltenbildung bei Leiterplatten in Kurztakt-Plattenpressen verhindern kann, auch wenn keine für den Wärmeübergang nachteiligen Polster verwendet werden. Eine Plattenpresse mit Heizplatten, die nach der vorliegenden Erfindung ausgebildet sind, kann also mit erheblichen verkürzten Taktzeiten gefahren werden.

Der mindestens eine Kanal in der Trennebene kann nach Art einer Kammer ausgebildet sein und die Trennebene großflächig zumindest teilweise ausfüllen. Dies ist zwar im Hinblick auf eine gleichmäßige Temperaturverteilung innerhalb der Heizplatte mittels des Thermofluids nicht ganz optimal, jedoch ergibt sich so eine definierte Druckkammer im Inneren der Heizplatte, so dass über den Pumpendruck die erwünschte Auswölbung mindestens einer der beteiligten Teilplatten definiert geregelt werden kann.

Nun hängt es jedoch von der Geschwindigkeit ab, mit der das Thermofluid durch die Heizplatte hindurchgeleitet wird, um die notwendigen schnellen Aufheiz- und Abkühlzeiten zu gewährleisten, wie hoch der Pumpendruck für das Thermofluid sein muss. Der Pumpendruck ist also eine Größe, die insofern nicht zur Regelung der Auswölbung der Heizplatte verändert werden sollte. Deshalb sieht eine bevorzugte Weiterbildung der vorliegenden Erfindung vor, die Heizplatte aus mindestens drei Teilplatten mit einer ersten und einer zweiten Trennebene zusammenzusetzen, wobei in der ersten Trennebene der großflächig ausgebildete Kanal zur Bildung einer Druckkammer für die Auswölbung der Heizplatte angeordnet ist, während in der zweiten Trennebene eine Anzahl von Thermofluid-Kanälen verläuft, welche mit einem jeweils nach außen führenden Thermofluid-Vorlauf und einem Thermofluid-Rücklauf verbunden sind. Die die zweite Trennebene einschließenden Teilplatten sind hierbei so zusammengefügt, dass sie sich nicht konvex auswölben. Somit sind zwei getrennte Druckkreisläufe vorhanden, ein Kreislauf für das Thermofluid, das für die gleichmäßige und schnelle Aufheizung sowie Abkühlung der Heizplatte verantwortlich ist und ein zweiter Kreislauf mit regelbarem Flüssigkeitsdruck für den als großflächige Druckkammer ausgebildeten Kanal in der ersten Trennebene der Heizplatte, mit dem die erwünschte konvexe Auswölbung der Heizplatte definiert eingestellt werden kann.

Diese Weiterbildung einer erfindungsgemäßen Heizplatte kann dadurch noch modifiziert werden, dass die zwischen der ersten und der zweiten Trennebene angeordnete Teilplatte als Kanalplatte ausgebildet ist, in der von der ersten zur zweiten Trennebene durchgehende Ausnehmungen zur Bildung der Kanäle eingebracht sind, beispielsweise durch Ausschneiden mittels Laser oder Wasserstrahl. Ein Fräsen von Kanälen entfällt hierdurch, was deutliche Kostenvorteile beim Herstellen mit sich bringt.

Das Zusammenfügen der beiden Teilplatten, welche die zweite Trennebene einschließen, erfolgt vorzugsweise mittels Hochtemperatur-Vakuum-Löten mit einer in die zweite Trennebene eingelegten Hartlot-Folie. Die Verbindung dieser beiden Teilplatten erfolgt also nicht nur randseitig umlaufend, sondern auch die zwischen den Kanälen aufeinanderliegenden Bereiche der Teilplatten werden in der Trennebene mittels des Lötvorgangs fest miteinander verbunden, so dass das später durch die Kanäle fließende Thermofluid nicht in einen in der Trennebene etwa vorhandenen Spalt hineinfließen kann. Die wirksame Fläche, mit der das druckbeaufschlagte Thermofluid die Teilplatten auseinanderdrücken will, entspricht dann nur noch der Gesamtfläche der Kanäle in Projektion auf die Plattenebene, und nicht der gesamten Fläche der Heizplatte. Gleichzeitig ist die Hartlot-Folie sehr temperaturbeständig, so dass als Fluid in den Kanälen Thermoöl verwendet werden kann, dessen Temperatur bis zu 400 °C betragen kann. Gleichwohl ist das Hochtemperatur-Vakuum-Löten sehr kostengünstig und rationell durchführbar, da lediglich die aus vorgefrästen oder vorgeschnittenen Teilplatten zusammengesetzte Heizplatte mit zwischengelegter Hartlot-Folie in einen Hochtemperatur-Vakuum-Ofen verbracht und darin behandelt werden muss.

Die Hartlot-Folie kann vor Auflegen derselben auf eine von zwei zusammenzufügenden Teilplatten der Kanalstruktur angepasst werden. Dies erfolgt zweckmäßigerweise so, dass die Ausfräsungen in der Teilplatte, welche die Kanäle bilden, auf die Hartlot-Folie übertragen und aus dieser ausgeschnitten werden. Es ergibt sich so eine Hartlot-Folie, welche die Trennebene mit Ausnahme der Kanalwände ganzflächig ausfüllend überdeckt.

Überraschend hat sich jedoch gezeigt, dass die Hartlotfolie beim Hochtemperatur-Vakuum-Löten auch ganzflächig überdeckend zwischen die Teilplatten eingelegt werden kann, und zwar selbst dann, wenn die Kanäle nicht nur einseitig in einer Teilplatte eingefräst werden und die andere Teilplatte nur als Deckel fungiert, sondern auch dann, wenn jeweils nur ein Teilquerschnitt in jede der beiden beteiligten Teilplatten eingefräst wird. Denn beim Hochtemperatur-Vakuum-Lötvorgang fließt die Hartlot-Folie, die sich im Inneren eines Kanals befindet, an die Kanalwände und lagert sich dort bevorzugt in den Ecken des Querschnitts ab, so dass sie innerhalb des Kanals nicht mehr stört, sondern im Gegenteil durch die Ablagerung in den Kanalecken und der sich ergebenden Abrundung derselben sogar einen vorteilhaften Effekt auf einen Fluiddurchfluss durch den Kanal bietet.

Wenn für die erfindungsgemäße Heizplatte wie üblich Teilplatten aus Stahl verwendet werden, wird als Hartlot-Folie beim Hochtemperatur-Vakuum-Löten bevorzugt eine Kupferfolie verwendet. Der Lötvorgang kann dann bei zirka 1100 °C erfolgen. Dies führt bei der Herstellung der erfindungsgemäßen Heizplatte zu reproduzierbaren Ergebnissen und sehr stabilen Heizplatten.

Alternativ zur Ausbildung des mindestens einen Kanals in der (ersten) Trennebene als großflächige Druckkammer zur konvexen Auswölbung der Heizplatte, kann der mindestens eine Kanal mäanderförmig in der Trennebene liegen, oder es kann wie bei herkömmlichen Heizplatten eine Mehrzahl von Kanälen vorgesehen sein, die von Thermofluid durchströmbar sind. Der mindestens eine Kanal, der für die konvexe Auswölbung der Heizplatte zumindest zum Teil verantwortlich ist, kann also für den Durchfluss von Thermofluid optimiert sein, und der zur Auswölbung der Heizplatte verwendete Flüssigkeitsdruck kann der Pumpendruck des Thermofluids sein.

Um die Fläche der so vom Thermofluid durchflossenen Kanäle nicht allzu groß machen zu müssen, nur um die zur Auswölbung der Heizplatte erforderliche Kraft in der Flächennormalen zu erzeugen, kann zwischen den Kanälen ein entlang der Trennebene verlaufender Spalt vorgesehen sein, in welchen das Thermofluid eindringen kann. Es wird hierbei also der oben bei der Diskussion des Standes der Technik nach der DE 203 01 292 U1 als nachteilig beschriebene Effekt einer ganzflächig sich in der Trennebene verteilenden Flüssigkeit, die zur konvexen Auswölbung der Heizplatte führt, umgekehrt als gewollter Effekt genutzt.

Da es sich bei einer derartigen Auswölbung der Heizplatte um einen ursprünglich nicht gewollten Effekt handelt, und da der Pumpendruck für das Thermofluid primär nach den Notwendigkeiten der Durchflussgeschwindigkeit des Thermofluids eingestellt werden muss, können nach einer weiteren bevorzugten Ausgestaltung der Erfindung Sicherungen vorgesehen sein, die die beiden bei der Auswölbung beteiligten Teilplatten formschlüssig aneinander festlegen, und zwar so, dass sie einen Anschlag für die maximal gewollte konvexe Auswölbung bilden. Soweit der Pumpendruck für das Thermofluid einen bestimmten Mindestdruck nicht unterschreitet, kann durch einen solchen simplen Anschlag einer maximalen Auswölbung erreicht werden, dass die Heizplatte sich immer bis zu diesem Anschlag auswölbt und damit eine definierte konvexe Form einnimmt.

Hierzu werden die Teilplatten an ihren an die Trennebene angrenzenden Oberflächen jeweils mit einer Anzahl von teilweise hinterschnittenen Nuten versehen, in welche mindestens je ein Verbinder eingesetzt ist. Die Verbinder weisen den Hinterschneidungen der Nuten entsprechende Verbreiterungen zum Hintergreifen der Hinterschneidungen auf, sitzen jedoch mit einem in der Heizplattennormalen wirksamen Spiel in den Nuten, wobei das Spiel über die Fläche unterschiedlich ausgestaltet ist, derart, dass im Randbereich der Heizplatte kaum Spiel vorhanden ist, während zum Zentrum der Heizplatte hin das. Spiel in den beteiligten Nuten jeweils größer wird, um eine konvexe Verformung der beteiligten Teilplatten zuzulassen. Die Verbinder sitzen einerseits in der einen Teilplatte und andererseits in der anderen Teilplatte, hintergreifen die jeweiligen Hinterschneidungen der jeweiligen Nuten und sorgen so für eine spielbehaftete, formschlüssige Verbindung der beiden Teilplatten untereinander, und zwar, nach Aufeinandersetzen der beiden Teilplatten, ohne irgendeine Verbindung nach außen. Es besteht hier also keine Gefahr, dass das Thermofluid nach außen dringen kann.

Diese Verbinder werden vorzugsweise so in die Heizplatte eingebracht, dass die Nuten in der einen Teilplatte in Längsrichtung gegen die Nuten in der anderen Teilplatte verschoben sind, wobei derjenige Teil der Nuten, der hinterschnitten ist, bei lagerichtig aufeinandergesetzten Teilplatten jeweils übereinander zu liegen kommt, während der jenige Teil der Nuten, der keine Hinterschneidungen aufweist, dann gegeneinander versetzt angeordnet ist. Dementsprechend können die Verbinder zunächst in eine Teilplatte eingesetzt werden, worauf die andere Teilplatte in Längsrichtung der Nuten versetzt auf die eine Teilplatte aufgesetzt und dann entlang der Längsrichtung der Nuten verschoben wird, um zu ermöglichen, dass die Verbinder an denjenigen Stellen, an denen die Nuten keine Hinterschneidung aufweisen, in die Nuten eingeführt werden und nach Verschieben der beiden Teilplatten gegeneinander, bis sie deckungsgleich aufeinanderliegen, dann beidseits die Hinterschneidungen der Nuten hintergreifen. Danach können die beiden Teilplatten zusammengefügt werden, beispielsweise durch randseitig umlaufendes Verschweißen.

Vorzugsweise bestehen die Verbinder aus demselben Material wie die Teilplatten, in denen sie montiert werden, insbesondere also aus Stahl. Dies hat den Vorteil, dass die Verbinder denselben Wärmeausdehnungskoeffizienten besitzen, wie das Material, in dem sie sitzen, so dass keine Verspannungen durch Erwärmen und Abkühlen der Heizplatten zu befürchten sind. Die Verbinder können im Übrigen eine Längs-Symmetrieachse aufweisen oder als Rotationskörper ausgebildet sein. Im Querschnitt können sie beispielsweise eine Doppel-T-Form oder eine doppelte Schwalbenschwanzform oder eine Kombination dieser beiden oder anderer Formen aufweisen.

Einige Ausführungsbeispiele für eine erfindungsgemäße Heizplatte sind im Folgenden anhand der beigefügten Zeichnungen beschrieben und erläutert.

Es zeigen:
- Figur 1: eine schematische seitliche Schnittdarstellung eines ersten Ausführungsbeispiels einer erfindungsgemäßen Heizplatte
- Figur 2: die Heizplatte aus Figur 1 nach Druckbeaufschlagung;
- Figur 3: eine schematische seitliche Schnittdarstellung eines zweiten Ausführungsbeispiels für eine erfindungsgemäße Heizplatte;
- Figur 4: die Heizplatte aus Figur 3 nach Druckbeaufschlagung;
- Figur 5: eine Darstellung eines dritten Ausführungsbeispiels wie in den vorangegangenen Figuren;
- Figur 6: die Heizplatte aus Figur 5 nach Druckbeaufschlagung;
- Figur 7: eine Darstellung eines vierten Ausführungsbeispiels wie in den vorangegangenen Figuren;
- Figur 8: die Heizplatte aus Figur 7 nach Druckbeaufschlagung.

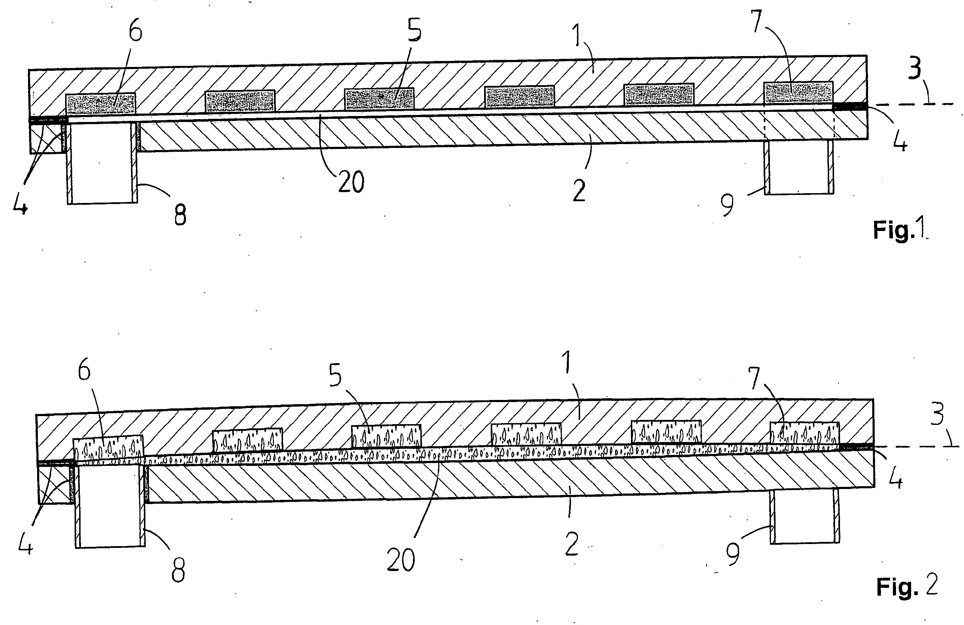

Der in Figur 1 dargestellte seitliche Schnitt einer erfindungsgemäß ausgebildeten Heizplatte zeigt schematisch eine obere Teilplatte 1 und eine untere Teilplatte 2, die an einer Trennebene 3 zusammengefügt sind. In die Trennebene 3 ist randseitig umlaufend eine Hartlotfolie 4 eingebracht, welche nach einem Hochtemperatur-Vakuum-Lötvorgang die obere Teilplatte 1 und die untere Teilplatte 2 randseitig umlaufend fest miteinander verbindet. In die obere Teilplatte 1 sind Kanäle 5 eingefräst, hier als Fluid-Kanäle für Thermoöl ausgebildet, die einerseits in einen gemeinsamen Vorlaufkanal 6 und andererseits in einen gemeinsamen Rücklaufkanal 7 münden. Ein erster Anschlussstutzen 8 für den Vorlaufkanal 6 und ein zweiter Anschlussstutzen 9 für den Rücklaufkanal 7 sind mit derselben Hartlotfolie 4 im gleichen Arbeitsgang mit dem Zusammenfügen der oberen Teilplatte 1 mit der unteren Teilplatte 2 in die untere Teilplatte 2 eingelötet worden. Zwischen der oberen Teilplatte 1 und der unteren Teilplatte 2 ist in der Trennebene 3 ein Spalt 20 ausgebildet, in den das durch die Kanäle 5 fließende Thermoöl eindringen kann und in dem sich das Thermoöl über nahezu die gesamte Fläche der Heizplatte hinweg verteilt.

Nach Druckbeaufschlagung des durch den Vorlaufkanal 6, die Kanäle 5 und den Rücklaufkanal 7 fließenden Thermoöls, welches sich auch nahezu ganzflächig im Spalt 20 innerhalb der Heizplatte verteilt, ergibt sich das in Figur 2 gezeigte Bild: Aufgrund des hydrostatischen Drucks und der großen Fläche des Spalts 20 wölben sich die obere Teilplatte 1 und die untere Teilplatte 2 auseinander, wodurch sich eine konvexe Oberfläche der Heizplatte ergibt. Die Dichtigkeit der Heizplatte gegen Austreten von Thermoöl ist gleichwohl gegeben, da außen umlaufend die Hartlotfolie 4 für die Abdichtung des Spalts 20 nach au-ßen sorgt.

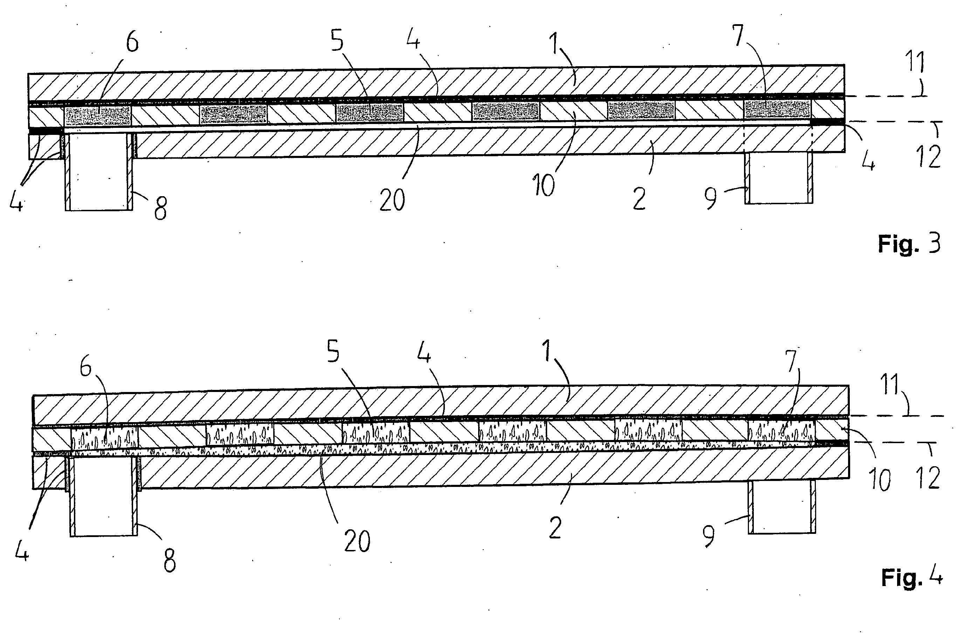

Das in Figur 3 in einer in Figur 1 entsprechenden Darstellung gezeigte weitere Ausführungsbeispiel für eine erfindungsgemäße Heizplatte besteht wiederum aus einer oberen Teilplatte 1 und einer unteren Teilplatte 2, die jedoch beide plan und unbearbeitet sind. Zwischenliegend ist eine Kanalplatte 10 als dritte Teilplatte eingeschlossen, wobei aus der Kanalplatte 10 die Kanäle 5 von oben nach unten durchgehend ausgeschnitten sind. Dies kann, da die Kanäle 5 sich über die gesamte Dicke der Kanalplatte 10 erstrecken, kostengünstig mittels Laserschneiden oder Wasserstrahlschneiden erfolgt sein, so dass sich der relativ teure Fräsprozess zur Herstellung der Kanäle 5 erübrigt.

Dementsprechend weist die in Figur 3 gezeigte Heizplatte eine obere Trennebene 11 zwischen der oberen Teilplatte 1 und der Kanalplatte 10 sowie eine untere Trennebene 12 zwischen der Kanalplatte 10 und der unteren Teilplatte 2 auf, in welchen beiden Trennebenen 11, 12 zwei Hartlotfolien 4 eingelegt sind. In der unteren Trennebene 12 ist die Hartlot-Folie 4 wie im Ausführungsbeispiel nach den Figuren 1 und 2 lediglich randseitig umlaufend eingebracht; wobei ein Spalt 20 zwischen der Kanalplatte 10 und der unteren Teilplatte 2 als eine Art Druckkammer verbleibt, während in der oberen Trennebene 11 die Hartlotfolie 4 die gesamte Fläche der Teilplatte 1 überdeckt. Nach Einsetzen der beiden Anschlussstutzen 8, 9 wird hier wiederum die gesamte Heizplatte in den Hochtemperatur-Vakuum-Löt-Ofen eingebracht und verlötet. Dementsprechend liegt die Kanalplatte 10 ganzflächig mit der oberen Teilplatte 1 verbunden an dieser an, gleichwohl wie viel Druck der durch die Kanäle 5 fließenden Flüssigkeit aufgegeben wird.

Figur 4 zeigt wiederum die Situation der in Figur 3 dargestellten Heizplatte nach Druckbeaufschlagung des Thermofluids. Es ist gut zu erkennen, dass der Spalt 20 sich aufgrund des hydrostatischen Drucks der Thermoflüssigkeit weitet und eine konvexe Verformung der Heizplatte bewirkt.

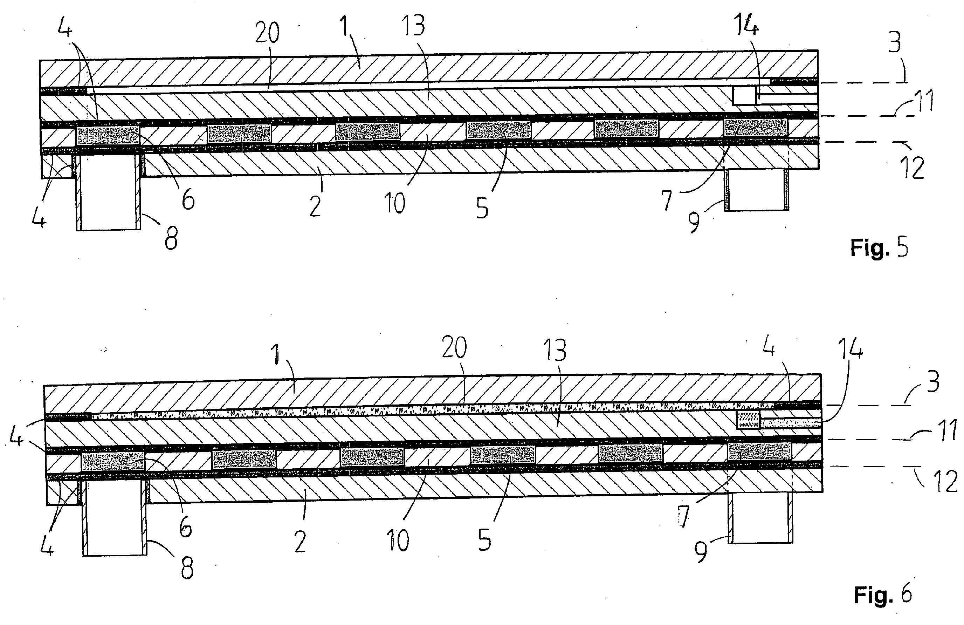

Figur 5 zeigt ein drittes Ausführungsbeispiel einer erfindungsgemäßen Heizplatte in einer den Figuren 1 bis 4 entsprechenden Darstellung. Diese Heizplatte besteht nunmehr aus vier Teilplatten, der unbearbeiteten oberen Teilplatte 1, der unbearbeiteten unteren Teilplatte 2, der auf der unteren Teilplatte 2 aufliegenden Kanalplatte 10 mit Kanälen 5 und einer zwischen der Kanalplatte 10 und der oberen Teilplatte 1 angeordneten Zwischenplatte 13. Zwischen der Zwischenplatte 13 und der oberen Teilplatte 1 befindet sich die Trennebene 3 mit dem als Spalt 20 ausgebildeten großflächigen Kanal, der außen umlaufend durch Verlöten mittels Hartlotfolie 4 begrenzt und abgedichtet ist, während oberhalb der Kanalplatte 10 wiederum die obere Trennebene 11 und unterhalb der Kanalplatte 10 die untere Trennebene 12 jeweils ganzflächig mit Hartlotfolie 4 versehen sind und für eine ganzflächige feste Verbindung der Zwischenplatte 13, der Kanalplatte 10 und der unteren Teilplatte 2 untereinander sorgen.

Der als Spalt 20 ausgebildete, mindestens eine Kanal in der Trennebene 3 fungiert bei diesem Ausführungsbeispiel einer erfindungsgemäßen Heizplatte nicht mehr als Kanal für ein Thermofluid zum Aufheizen und Abkühlen der Heizplatte, sondern bildet lediglich noch eine nahezu ganzflächige Druckkammer, die unabhängig vom Thermofluid-Kreislauf von einer regelbaren Pumpe über einen Druckkanal 14 mit druckbeaufschlagter Flüssigkeit befüllt wird. Je nachdem, wie der Druck über den Druckkanal 14 geregelt wird, wölbt sich die obere Teilplatte 1 mehr oder weniger, um die konvexe Form der Heizplatte zu erzeugen. Die Situation nach Druckbeaufschlagung über den Druckkanal 14 zeigt Figur 6.

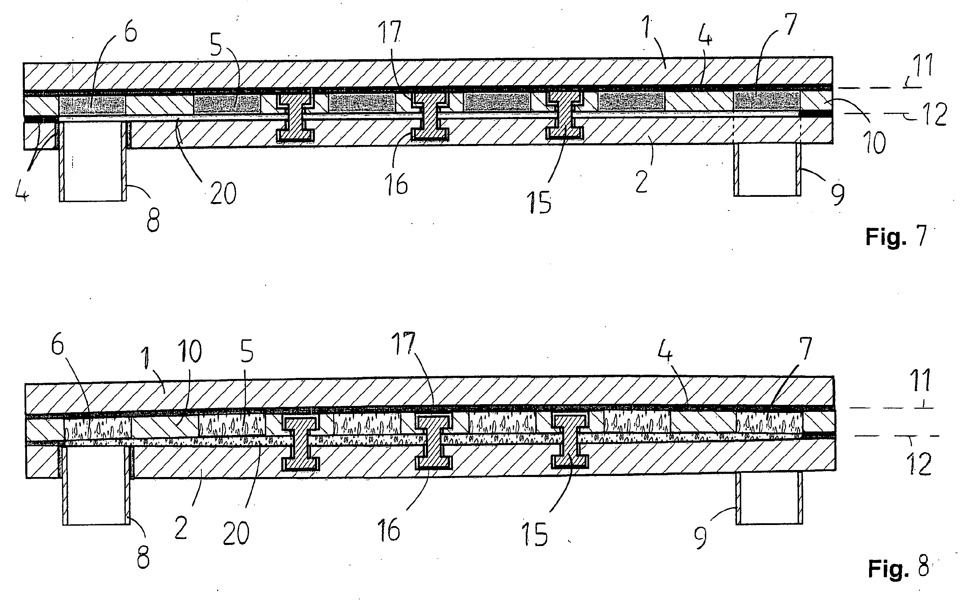

Figur 7 schließlich zeigt ein viertes Ausführungsbeispiel in einer den vorhergehenden Figuren entsprechenden Darstellung. Es handelt sich hier wiederum, wie in den Figuren 3 und 4, um einen Aufbau der Heizplatte mit drei Teilplatten, einer oberen Teilplatte 1, einer unteren Teilplatte 2 und einer zwischengelegten Kanalplatte 10, wobei hinsichtlich dieses Aufbaus auf die Beschreibung der Figur 3 Bezug genommen wird. Zusätzlich zu dem in Figur 3 dargestellten Ausführungsbeispiel weist die hier gezeigte Heizplatte außerdem eine Anzahl von Verbindern 15 auf, die einerseits in Nuten 16 in der unteren Teilplatte 2 und andererseits in Nuten 17 in der Kanalplatte 10 formschlüssig sitzen, allerdings mit Spiel in Richtung der Flächennormalen, so dass sie in dem in Figur 7 gezeigten Zustand ohne Funktion sind.

In Figur 8 ist das Ausführungsbeispiel aus Figur 7 in demjenigen Zustand gezeigt, in dem das durch die Kanäle 5 (und den Spalt 20) geleitete Thermofluid druckbeaufschlagt wird und für eine konvexe Auswölbung der Heizplatte führt. Wie anhand Figur 8 deutlich wird, ist das Spiel der Verbinder 15 in ihren Nuten 16, 17 nun nicht mehr vorhanden, sondern die Verbinder 15 hintergreifen formschlüssig Hinterschneidungen 18 der Nuten 16 und 17, fungieren hier mithin also als definierter Anschlag und als Sicherungen gegen ein weiteres Auswölben der Heizplatte.

Abschließend soll nochmals erwähnt werden, dass die erfindungsgemäßen Heizplatten nicht nur zur Übertragung von Wärme, sondern auch zur Übertragung von Kälte verwendet und dementsprechend als "Kühlplatten" in Kaltpressen eingesetzt werden können, ohne den Rahmen der Erfindung zu verlassen. Auch ein gemischter Einsatz bei Heizplatten, die zwei Trennebenen aufweisen, ist denkbar: in der ersten Trennebene wird Wärme und in der zweiten Trennebene wird Kälte in die Platte eingebracht.

## Patentansprüche

1. Heizplatte für eine Plattenpresse zum flächigen Verpressen von tafelförmigen Werkstücken mittels Druck und Wärme, bestehend aus mindestens zwei an einer im Wesentlichen parallel zur Heizplattenebene verlaufenden Trennebene (3) miteinander verbundenen Teilplatten (1, 2, 10, 13), wobei im Inneren der Heizplatte mindestens ein Kanal (20) vorgesehen ist, der entlang der Trennebene (3) zwischen den Teilplatten (1, 2, 10, 13) verläuft und mit einem jeweils nach außen führenden Vorlaufkanal (6) sowie einem Rücklaufkanal (7) verbunden ist, wobei die Teilplatten (1, 2, 10, 13) randseitig umlaufend fest aneinandergefügt sind,
**dadurch gekennzeichnet,**
**dass** die Teilplatten (1, 2, 10, 13) innerhalb des randseitigen, fest aneinandergefügten Bereichs nicht aneinandergefügt und derart ausgebildet sind, dass ein in der Trennebene (3) wirkender Spaltdruck eines druckbeaufschlagten, durch den Kanal (20, 5) strömenden Fluids zu einer konvexen Auswölbung zumindest einer der Teilplatten (1, 2) führt.

2. Heizplatte nach Anspruch 1,
**dadurch gekennzeichnet,**
**dass** der Kanal (20) in der Trennebene (3) nach Art einer Kammer großflächig ausgebildet ist.

3. Heizplatte nach Anspruch 2,
**dadurch gekennzeichnet,**
**dass** die Heizplatte mindestens drei Teilplatten (1, 2, 10) mit einer ersten Trennebene (3, 12) und einer zweiten Trennebene (11, 12) umfasst, wobei in der ersten Trennebene (3, 12) der großflächig ausgebildete Kanal (20) angeordnet ist und in der zweiten Trennebene (11) eine Anzahl von Thermofluid-Kanälen (5) vorgesehen ist, welche mit einem jeweils nach außen führenden Thermofluid-Vorlauf (6) und einem Thermofluid-Rücklauf (7) verbunden sind, wobei die die zweite Trennebene (12) einschließenden Teilplatten (2, 10) bzw. (1, 10) so zusammengefügt sind, dass sie sich nicht konvex auswölben.

4. Heizplatte nach Anspruch 3,
**dadurch gekennzeichnet,**
**dass** die Teilplatte zwischen der ersten Trennebene (12) und der zweiten Trennebene (11) als Kanalplatte (10) mit von der ersten zur zweiten Trennebene durchgehenden Ausnehmungen zur Bildung der Kanäle (5) ausgebildet ist.

5. Heizplatte nach einem der Ansprüche 3 oder 4,
**dadurch gekennzeichnet,**
**dass** die die zweite Trennebene (11) einschließenden Teilplatten (1, 10, 13) mittels Hochtemperatur-Vakuum-Löten mit einer in die zweite Trennebene (11) eingelegten Hartlot-Folie (4) miteinander verbunden sind.

6. Heizplatte nach Anspruch 5,
**dadurch gekennzeichnet,**
**dass** die Hartlotfolie (4) die zweite Trennebene (11) ganzflächig ausfüllend in der Heizplatte angeordnet ist.

7. Heizplatte nach Anspruch 5,
**dadurch gekennzeichnet,**
**dass** die Hartlotfolie (4) beim Hochtemperatur-Vakuum-Löten ganzflächig zwischen die Teilplatten (1, 2, 10, 13) eingelegt worden ist.

8. Heizplatte nach mindestens einem der Ansprüche 5 bis 7,
**dadurch gekennzeichnet,**
**dass** die Hartlotfolie (4) im Wesentlichen aus Kupfer besteht.

9. Heizplatte nach Anspruch 1,
**dadurch gekennzeichnet,**
**dass** der mindestens eine Kanal (20) mäanderförmig in der Trennebene (3) liegt oder eine Mehrzahl von Kanälen (5) vorgesehen ist, die von Thermofluid druchströmbar sind.

10. Heizplatte nach Anspruch 9,
**dadurch gekennzeichnet,**
**dass** zwischen den Kanälen (5) ein entlang der Trennebene (12) verlaufender Spalt vorgesehen ist, in welchen das Thermofluid eindringen kann.

11. Heizplatte nach einem der Ansprüche 9 oder 10,
**dadurch gekennzeichnet,**
**dass** die Teilplatten (1, 2, 10, 13) an ihren an die Trennebene (3, 11, 12) angrenzenden Oberflächen jeweils mit einer Anzahl von teilweise hinterschnittenen Nuten (16, 17) versehen sind, in welche jeweils mindestens ein Verbinder (15) eingesetzt ist, der den Hinterschneidungen (18) der Nuten (16, 17) entsprechende Verbreiterungen zum Hintergreifen der Hinterschneidungen (18) aufweist, wobei die Verbinder (5) mit unterschiedlichem, in der Heizplattennormalen wirksamen Spiel eingesetzt sind, derart, dass im Randbereich der Heizplatte kaum Spiel vorhanden ist, während zum Zentrum der Heizplatte hin das Spiel jeweils größer wird, um eine konvexe Verformung der beiden beteiligten Teilplatten (1, 2, 10, 13) zuzulassen.

12. Heizplatte nach Anspruch 11,
**dadurch gekennzeichnet,**
**dass** die Verbinder (15) aus demselben Material wie die Teilplatten (1, 2, 10, 13), insbesondere aus Stahl gefertigt sind.

13. Heizplatte nach einem der Ansprüche 11 oder 12,
**dadurch gekennzeichnet,**
**dass** die Verbinder (15) im Querschnitt eine Doppel-T-Form oder eine doppelte Schwalbenschwanzform aufweisen.

14. Heizplatte nach mindestens einem der Ansprüche 1 bis 13,
**dadurch gekennzeichnet,**
**dass** die Teilplatten (1, 2, 10, 13) randseitig umlaufend miteinander verschweißt sind.

15. Heizplatte nach mindestens einem der Ansprüche 1 bis 13,
**dadurch gekennzeichnet,**
**dass** die Teilplatten (1, 2, 10, 13) randseitig umlaufend mittels Hochtemperatur-Vakuum-Löten aneinandergefügt sind.
